# EUROPÄISCHE PATENTSCHRIFT

(11) **EP 0 542 773 B1**
(45) Veröffentlichungstag und Bekanntmachung des Hinweises auf die Patenterteilung: **17.11.1994**
(21) Anmeldenummer: 91913349.6
(22) Anmeldetag: 06.08.1991
(51) Int. Cl.: B60R 22/02

(54) **VORRICHTUNG ZUM MOTORISCHEN BEWEGEN EINES SICHERHEITSGURTS IN EINEM KRAFTFAHRZEUG**
DEVICE FOR THE MOTORISED MOVEMENT OF A SAFETY BELT IN A MOTOR VEHICLE
DISPOSITIF POUR LE DEPLACEMENT MOTORISE D'UNE CEINTURE DE SECURITE DANS UN VEHICULE AUTOMOBILE

(30) Priorität: 09.08.1990 DE 4025217; 23.08.1990 DE 4026637
(43) Veröffentlichungstag der Anmeldung: 26.05.1993
(73) Patentinhaber: ROBERT BOSCH GMBH, 70442 Stuttgart (DE); MERCEDES-BENZ AG, 70327 Stuttgart (DE)
(72) Erfinder: WIESLER, Martin, D-7570 Baden-Baden-Neuweier (DE); HUCK, Thomas, D-7580 Buehl (DE); SCHILLER, Herbert, D-7582 Buehlertal (DE)
(86) Internationale Anmeldenummer: DE9100630
(87) Internationale Veröffentlichungsnummer: WO9202388

(56) Entgegenhaltungen:
- EP-A- 0 116 839
- DE-A- 3 633 902
- DE-C- 3 909 361
- FR-A- 2 384 510

## Beschreibung

### Stand der Technik

Die Erfindung geht aus von einer Vorrichtung nach der Gattung des Hauptanspruchs. Es ist schon eine solche Vorrichtung bekannt (FR-A-23 84 510), bei der das Bauteil von der Zahnstange getrennt wird, wenn dieses während seiner Rücklaufbewegung gegen einen Widerstand läuft. Vor der Wiederinbetriebnahme bedarf es zunächst eines Montageschrittes, der zur Wiederherstellung einer betriebsfähigen Vorrichtung führt.

Ein anderer bekannter Gurtbringer (DE-A-36 33 902) ist in seiner Länge einstellbar, damit er auch für höhenverstellbare Umlenkbeschläge verwendet werden kann. Eine dazu erforderliche Sperrklinkeneinrichtung sichert jedoch die eingestellte Länge, so daß ein Ausweichen des Bauteils gegenüber der Stange während des Betriebs nicht möglich ist.

### Vorteile der Erfindung

Die erfindungsgemäße Vorrichtung mit den kennzeichnenden Merkmalen des Hauptanspruchs hat demgegenüber den Vorteil, daß das Bauteil während seiner Ausweichbewegung an die Zahnstange gefesselt bleibt und sich die vorschriftsmäßige Zuordnung selbsttätig wiedereinstellt, wenn das Bauteil zusammen mit der Zahnstange in die Anbieteposition bewegt wird.

Durch die in den Unteransprüche aufgeführten Maßnahmen sind vorteilhafte Weiterbildungen und Verbesserungen der im Hauptanspruch angegebenen Vorrichtung möglich.

### Zeichnung

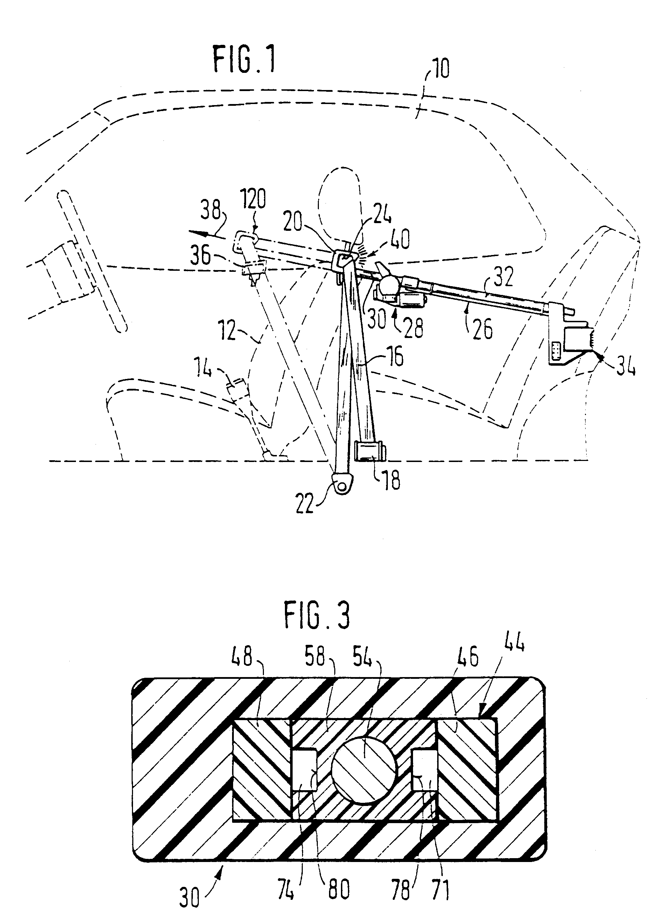

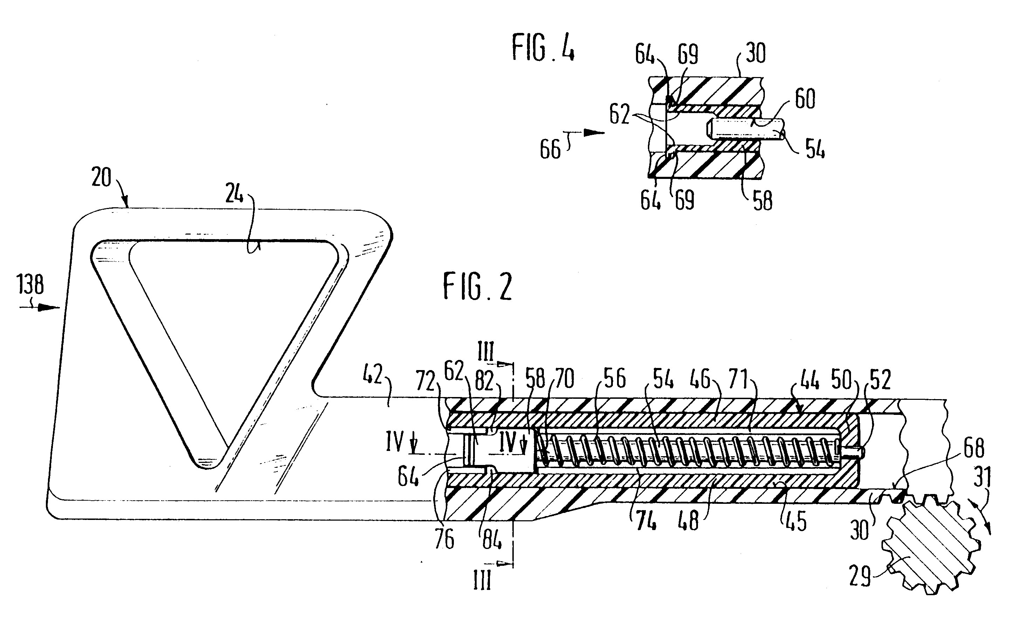

Ein Ausführungsbeispiel der Erfindung ist in der Zeichnung dargestellt und in der nachfolgenden Beschreibung näher erläutert. Es zeigen Figur 1 eine Prinzipdarstellung des Fahrgastraumes eines Kraftfahrzeuges, in welchen die erfindungsgemäße Vorrichtung eingezeichnet ist, Figur 2 ein zu der Vorrichtung gemäß Figur 1 gehörender Zahnstangenabschnitt im Schnitt sowie ein mit diesem verbundenes Haltebauteil für eine Sicherheitsgurt, in vergrößerter Darstellung, Figur 3 einen Querschnitt durch die Zahnstange gemäß Figur 2, entlang der Linie III-III in vergrößerter Darstellung und Figur 4 einen Teilschnitt entlang der Linie IV-IV in Figur 2, vergrößert dargestellt.

### Beschreibung des Ausführungsbeispiels

In Figur 1 ist mit gestrichelten Linien der Fahrgastzellenbereich 10 eines Kraftfahrzeuges dargestellt. Neben dem einen sichtbaren Fahrgastsitz 12 ist ein zu einem Sicherheitsgurtsystem gehörendes Gurtschloß 14 erkennbar, dem ein Sicherheitsgurt 16 zugeordnet ist. Der Sicherheitsgurt 16 führt von einer karosseriefesten Aufrollvorrichtung 18 über eine Umlenköse 20 zu einem pendelbar am Kraftfahrzeug angeordneten Endbeschlag 22. Diese Umlenköse ist als ringartiges Bauelement ausgebildet und nimmt in seiner Ausnehmung 24 den Sicherheitsgurt 16 lose auf. Die Umlenköse 20 gehört zu einem Sicherheitsgurt-Anbietesystem 26, welches fest mit der Karosserie des Kraftfahrzeuges verbunden ist. Beim Kraftfahrzeug gemäß dem Ausführungsbeispiel nach Figur 1 ist dieses System in der Seitenverkleidung im Bereich der hinteren Sitzbank angeordnet. Bei dem Kraftfahrzeug handelt es sich um ein Coupé, welches nur im Bereich der Vordersitze Türen aufweist, so daß die Karosserie des Fahrzeuges im Bereich der Hintersitze das System aufnehmen kann. Das Sicherheitsgurt-Anbietesystem 26 weist eine elektromotorische Antriebseinheit 28 auf, die als Abriebselement Zahnritzel 29 hat. Das Zahnritzel 29 kämmt mit einer Zahnstange 30, die in einer Führungshülse 32 längsverschiebbar ist. Weiter gehört zu dem Sicherheitsgurt-Anbietesystem 26 noch eine Steuerelektronik 34. Wie aus Figur 1 weiter ersichtlich ist, wird beim Betätigen der Antriebseinheit 23 die Zahnstange 30 zusammen mit der Umlenköse 20 in eine in Figur 1 strichpunktiert dargestellte Anbieteposition 120 überführt. In dieser Anbieteposition befindet sich die Umlenköse 20 vor der auf dem Sitz 12 sitzenden Person, so daß diese den Sicherheitsgurt mit der Einstecklasche 36 ohne Körperverrenkungen greifen und anlegen kann. Während dieser Anbietebewegung, die in Richtung des Pfeiles 38 erfolgt, rollt der Sicherheitsgurt 16 in der Aufrollvorrichtung 18 ab und der Beschlag 22 schwenkt so aus seiner gezeichneten Lage aus, daß eine ordnungsgemäße Gurtführung gewährleistet ist. Nach dem Anlegen des Gurts 16 wird der Umlenkbeschlag 20 wieder in seine in Figur 1 ausgezogen dargestellte Ablegeposition überführt, wobei der Gurtaufroller 18 für eine ordnungsgemäße Anlage des Sicherheitsgurts 16 an der zu sichernden Person sorgt. Die Umlenköse 20 befindet sich wieder neben der Schulter des zu sichernden Fahrgastes. Zu dieser Rückstellbewegung, welche gegen die Richtung des Pfeils 38 erfolgt, wird das Ritzel 29 in einer anderen Drehrichtung (Doppelpfeil 31) angetrieben als dies bei der Anbietebewegung (Pfeil 38) der Fall gewesen ist. Ein zur Antriebseinheit 28 gehörender elektrischer Antriebsmotor ist also drehrichtungsumkehrbar. Weiter ist noch bemerkenswert, daß das Gurt-Anbietesystem 26 so in der Seitenverkleidung des Kraftfahrzeuges untergebracht und angeordnet ist, daß sich die Umlenköse 20 in der Anbieteposition schräg vor der auf dem Sitz 12 sitzenden Person befinden. Die Zahnstange 30 schließt also in ausgefahrenem Zustand mit der Karosserie-Innenwand einen spitzen Winkel ein. An der Innenwand des Kraftfahrzeuges ist ein ganz spezieller Bereich vorbereitet und ausgebildet, an dem die Umlenköse 20 anliegen soll, wenn diese sich in ihrer Ablegeposition befindet, welche in Figur 1 ausgezogen dargestellt ist. Die Beendigung der Rückstellbewegung der Zahnstange 30 bzw. der Umlenköse 20 aus der Anbieteposition 120 entgegen dem Pfeil 38 in die in Figur 1 dargestellte Ablegeposition wird durch einen Schaltnocken bewirkt, der mit einem Endschalter zusammenarbeitet. Dabei ist die Abstimmung dieser beiden Bauteile aufeinander so getroffen, daß alle zulässigen Toleranzen, auch wenn diese auf die selben Seite gelegt werden, nicht die ordnungsgemäße Anlage der Umlenköse 20 an dem definierten Innenbereich 40 des Kraftfahrzeuges beeinträchtigen. Liegen die zulässigen Toleranzen jedoch auf der anderen Seite, wird dies dadurch ausgeglichen, daß die Umlenköse 20 gegenüber der Zahnstange 30 entgegen einer Federkraft in Richtung der Anbietebewegung 38 aus einer Ruhestellung heraus verschiebbar ist. Das Maß der möglichen Verschiebbarkeit ist also größer als das maximale Toleranzmaß, welches sich von dem definierten Innenbereich 40 zur endschalterbedingten Ablegestellung der Zahnstange 30 ergibt. Diese sogenannte Überfederung wird auf folgende Weise erreicht: Die Umlenköse 20 ist ein Bauteil, welches über einen Ansatz 42 mit einem langgestreckten Führungsschlitten 44 verbunden ist. Dieser Führungsschlitten 44 ist in einer Gleitführung 45 der Zahnstange 30 in seiner Längsrichtung verschiebbar geführt. Der Führungsschlitten 44 ist rahmenartig ausgebildet. Er weist somit zwei zueinander im wesentlichen parallele, langgestreckte Rahmenteile 46, 48 auf, die mit Abstand von dem Ansatz 42 über ein Querstück 50 miteinander verbunden sind. Dieses Querstück 50 nimmt ein Zapfenende 52 eines Bolzens 54 auf, der sich innerhalb des Rahmens von dem Querstück 50 zum Ansatz 42 erstreckt. Der Bolzen 54 wird von einer Schrauben-Druckfeder 56 umgeben, die sich mit ihrem einen Ende an der Innenseite des Rahmenteils 50 abstützt. Der Zapfenansatz 52 des Bolzens 54 ist im Durchmesser kleiner als der Durchmesser des Bolzens 54 zwischen den beiden Rahmenteilen 46 und 48, so daß sich der Bolzen 54 mit einem Ringbund an der Innenseite des Rahmenteils 50 abstützt. Der Bolzen 54 ist somit in Längsrichtung des Führungsschlittens festgelegt. Das von dem Zapfenende 52 abgewandte Ende des Führungsbolzens 54 ist in einem Bauelement 58 geführt, welches gegenüber der Zahnstange 30 festgelegt ist. Diese Anordnung ist insbesondere aus den Figuren 2 und 4 ersichtlich. Wie Figur 4 zeigt hat das Bauelement 58 eine Längsbohrung 60, in welcher der Bolzen 54 aufgenommen ist. Das aus einem federelastischen Kunststoff bestehende Bauelement 58 ist mit zwei einander gegenüberliegend angeordneten, über das Ende des Bolzens 54 hinausragenden Federlappen 62 versehen, an deren Außenseite Rastnocken 64 angebracht sind. Zur Montage des Bauteils 58 in der Zahnstange 30 kann das Bauteil 58 in Richtung des Pfeiles 66 in eine die Gleitführung 45 bildende Ausnehmung 69 hineingesteckt werden. Durch die besondere Ausbildung der Federlappen 62 gegenüber dem Bolzen 54 können die Federlappen 62 so weit auslenken, daß die Rastnocken 64 in die Führungsausnehmung 69 der Zahnstange 30 eingeführt werden können. Wenn die Rastnocken 64 in den Bereich von ihnen zugeordneten Rastaufnahmen 69 gelangen, federn diese in die in Figur 4 dargestellte Montageposition, so daß sich eine zahnstangenfeste Anordnung des Bauteils 58 ergibt. Dabei übernimmt die Bohrung 60 Funktion einer Gleitführung für den Bolzen 54. Eine dem Rahmenteil 50 zugewandte Endfläche 70 des Bauteils 58 dient zur Abstützung des anderen Endes der Schrauben-Druckfeder 56, die somit vorgespannt zwischen dem Rahmenteil 50 und dem Bauteil 58 positioniert ist. Die einander zugewandten Innenseiten der Rahmenteile 46 und 48 weisen je zwei miteinander fluchtende Führungsrippen 71, 72 bzw. 74, 76 auf, denen Führungsnuten 78, 80 des Bauteils 58 zugeordnet sind (Figur 3). Zwischen den jeweils miteinander fluchtenden Führungsrippen 70, 72 bzw. 74, 76 ist jeweils ein rippenloser Abstand 82, 84 vorgesehen, der ein problemloses Montieren des Bauteils 58 erlaubt.

Wenn nun während des Rücklaufs der Umlenköse 20 in Richtung des Pfeiles 138 - also entgegen der Richtung Pfeil 38 der Anbietebewegung (Figur 1) - die Umlenköse 20 beispielsweise an einem hier mit 84 bezeichneten Bereich an dem definierten Innenbereich 40 des Kraftfahrzeuges zur Anlage kommt, der Endschalter jedoch noch keinen Abschaltimpuls an die Steuerelektronik 34 gibt, erfolgt eine Relativbewegung zwischen der Zahnstange 30 und der Umlenköse 20 mit ihrem Ansatz 42. Die Zahnstange 30 macht dabei eine Bewegung in Richtung des Pfeiles 138 (Figur 2), während die Umlenköse 20 mit ihrem Ansatz 42 am definierten Innenbereich 40 des Kraftfahrzeuges festgehalten wird. Dabei drückt das Bauteil 58, welches mit der Zahnstange 30 fest verbunden ist, die Schrauben-Druckfeder 56 mehr und mehr zusammen, wobei der Führungsschlitten 44 zunehmend aus der Gleitführung 45 herauswandert, bis der Endschalter im Zusammenwirken mit dem Schaltnocken die elektromotorische Antriebseinheit 28 stillsetzt. Zweckmäßigerweise ist noch eine gewisse Ausfederungsreserve mit berücksichtigt, so daß auch Verletzungen von auf den Rücksitzen des Kraftfahrzeugs sitzenden Personen ausgeschlossen werden können, wenn diese beispielsweise an den betreffenden Innenbereich 40 des Kraftfahrzeuges greifen, während die Umlenköse 20 in ihre Ablegeposition läuft. Wenn danach die Umlenköse 20 mit dem Gurt 16 wieder in die Anbietstellung gebracht werden soll, aber die Zahnstange 30 in Richtung des Pfeiles 38 verschoben wird, bleibt die Umlenköse 20 zunächst am Innenbereich 40 angelegt, bis die Druckfeder 56 die der Zahnstange 30 zugewandte Endfläche 88 des Ansatzes 42 an der Zahnstange 30 angelegt hält. Diese in Figur 2 gezeigte Stellung soll als Ruhestellung bezeichnet werden.

Es ist klar, daß sich bei dem beschriebenen Ausführungsbeispiel um eine von vielen möglichen Versionen handelt. Beispielsweise ist es denkbar, die Umlenköse 20 direkt an der Zahnstange verschiebbar anzuordnen, ohne daß dabei ein Ansatz 42 vorgesehen sein muß.

## Patentansprüche

1. Vorrichtung zum motorischen Bewegen eines Sicherheitsgurts (16) in einem Kraftfahrzeug (10) aus einer Ablegeposition in eine Anbieteposition (38) mit einer längs verschiebbaren, mit einem drehrichtungsumkehrbar angetriebenen Ritzel (29) kämmenden Zahnstange (30), die an ihrem einen Endabschnitt mit einem den Sicherheitsgurt (16) lose haltenden Bauteil (20) versehen ist, das während der Rücklaufbewegung in die Ablegeposition des Sicherheitsgurts (16) gegen einen als Innenbereich des Kraftfahrzeugs (10) ausgebildeten Anschlag läuft, wobei das Bauteil (20) entlang einer Führung relativ zur Zahnstange (30) ausfährt, dadurch gekennzeichnet, daß zur Führung des Bauteils (20) ein mit diesem in Verbindung stehender, langgestreckter und entlang einer Gleitführung (45) der Zahnstange (30) gegen Federkraft verschiebbarer, rahmenartiger Führungsschlitten (44) vorgesehen ist, in dessen von den Rahmenteilen (46, 48, 50) umgebenen Bereich ein Führungsbolzen (54) angeordnet und in Längsrichtung des Führungsschlittens (44) festgelegt ist.

2. Vorrichtung nach Anspruch 1, dadurch gekennzeichnet, daß der Führungsbolzen (54) von einer vorgespannten Schrauben-Druckfeder (56) umgeben ist, die sich einerseits an einem der Rahmenteile (50) abstützt und andererseits an einem zahnstangenfesten Bauelement (58) angelegt ist.

3. Vorrichtung nach Anspruch 2, dadurch gekennzeichnet, daß das zahnstangenfeste Bauelement (58) innerhalb der Rahmenteile (46, 48, 50) angeordnet ist, mit der Zahnstange (30) verbunden, vorzugsweise verrastet ist und eine Längsbohrung (60) aufweist, in welcher der Führungsbolzen (54) verschiebbar geführt ist.

4. Vorrichtung nach Anspruch 3, dadurch gekennzeichnet, daß das Bauelement (58) an wenigstens einer seiner beiden zur Achse des Führungsbolzens (54) parallelen Seiten mit einer Führungsnut (78, 80) versehen ist und daß dieser Führungsnut eine Führungsrippe (70, 74) des Führungsschlittens (44) zugeordnet ist.

5. Vorrichtung nach einem der Ansprüche 1 bis 4, dadurch gekennzeichnet, daß das Bauelement (20) ringartig ausgebildet ist und in seiner Ausnehmung den Sicherheitsgurt (16) aufnimmt.

## Claims

1. Appliance for the motorized movement of a safety belt (16) in a motor vehicle (10) from a stored position into a proffered position (38), having a longitudinally displaceable rack (30) engaging with a pinion (29) whose drive can be reversed in direction, one end section of which rack (30) is provided with a component (20) loosely holding the safety belt (16), which component (20) runs against a stop configured as the internal region of the motor vehicle (10) during the return motion of the safety belt (16) into the stored position, the component (20) moving out relative to the rack (30) along a guide, characterized in that a frame-type longitudinally extended guide slide (44) is provided for guiding the component (20), which guide slide (44) is in connection with the component (20) and can be displaced against spring force along a sliding guide (45) of the rack (30), a guide pin (54) being arranged and fixed in the longitudinal direction of the guide slide (44) in the region of the latter surrounded by the frame parts (46, 48, 50).

2. Appliance according to Claim 1, characterized in that the guide pin (54) is surrounded by a preloaded helical compression spring (56) which is supported at one end on one of the frame parts (50) and is in contact at the other end on a structural element (58) fixed relative to the rack.

3. Appliance according to Claim 2, characterized in that the structural element (58) fixed relative to the rack is arranged within the frame parts (46, 48, 50), is connected to the rack (30), is preferably engaged and has a longitudinal hole (60) in which the guide pin (54) is displaceably guided.

4. Appliance according to Claim 3, characterized in that the structural element (58) is provided with a guide groove (78, 80) on at least one of its two sides parallel with the axis of the guide pin (54) and in that this guide groove is associated with a guide rib (70, 74) of the guide slide (44).

5. Appliance according to one of Claims 1 to 4, characterized in that the structural element (20) has a ring-type configuration and accommodates the safety belt (16) in its opening.

## Revendications

1. Dispositif pour déplacer à l'aide d'un moteur, une ceinture de sécurité (16) dans un véhicule à moteur (10) à partir d'une position d'enlèvement dans une position à usage immédiat, avec une crémaillère (30) pouvant se déplacer dans le sens de la longueur et engrenant avec un pignon (20) entraîné en rotation dans un sens ou dans l'autre, crémaillère qui est pourvue sur l'une de ses sections terminales d'un composant (20) maintenant de façon lâche la ceinture de sécurité (16), composant qui pendant le mouvement de retour arrière passe, quand la ceinture de sécurité (16) est en position d'enlèvement, contre une butée constituée comme la zone intérieure du véhicule à moteur (10), le composant (20) sortant le long d'un guidage par rapport à la crémaillère (30), dispositif caractérisé en ce que pour guider le composant (20) on prévoit un coulisseau (44) en forme de cadre se trouvant en liaison avec celui-ci, s'étendant dans le sens de la longueur et pouvant être déplacé à l'encontre de la force d'un ressort le long d'un guidage à glissement (45) de la crémaillère (30), coulisseau dans la zone duquel, entourée par les parties du cadre (46, 48, 50), est disposé un goujon de guidage 54 qui est fixé dans le sens longitudinal du coulisseau (44).

2. Dispositif selon la revendication 1, caractérisé en ce que le goujon de guidage (54) est entouré par un ressort de pression hélicoïdal (56) précontraint, qui s'appuie d'une part sur l'une des parties du cadre (50) et d'autre part est posé sur un composant (58) solidaire de la crémaillère.

3. Dispositif selon la revendication 2, caractérisé en ce que le composant (58) solidaire de la crémaillère est disposé à l'intérieur des parties du cadre (46, 48, 50), est relié à la crémaillère (30), est de préférence encliqueté et présente un alésage longitudinal (60), dans lequel passe de façon à pouvoir coulisser le goujon de guidage (54).

4. Dispositif selon la revendication 3, caractérisé en ce que le composant (58) est pourvu sur au moins l'un de ses deux côtés parallèles à l'axe du goujon de guidage (54) d'une rainure de guidage (78, 80) et en ce qu'à la rainure de guidage est associée une nervure de guidage (70, 74) du coulisseau (44).

5. Dispositif selon l'une des revendications 1 à 4, caractérisé en ce que le composant (20) est constitué à la manière d'une bague et reçoit dans son évidement la ceinture de sécurité (16).
